# EUROPEAN PATENT APPLICATION

(11) **EP 4 815 342 A1**
(43) Date of publication of application: **30.09.2026**
(21) Application number: 26161453.1
(22) Date of filing: 27.02.2026
(51) Int. Cl.: H04B 10/70, H04L 9/08

(54) **OPTICAL TRANSMITTER AND QUANTUM COMMUNICATION SYSTEM**

(30) Priority: 27.03.2025 GB 202504562
(71) Applicant: KABUSHIKI KAISHA TOSHIBA, Kawasaki-shi, Kanagawa (JP)
(72) Inventor: WOODWARD, Robert Ian, Cambridge, CB4 0GZ (GB); SCALON, Davide, Cambridge, CB4 0GZ (GB); STEVENSON, Richard Mark, Cambridge, CB4 0GZ (GB); SHIELDS, Andrew James, Cambridge, CB4 0GZ (GB)
(74) Representative: Marks & Clerk LLP

(57) **Abstract**

A quantum transmitter for use in a quantum communication system is provided, the transmitter comprising: a plurality of quantum state encoders, each encoder configured to emit portions of light, each portion encoded with a respective quantum state; and a beam combining module configured to receive portions of light emitted from each quantum state encoder, and combine the received portions to produce output light comprising a sequence of successive portions of light emitted by each encoder. A corresponding quantum communication system is also provided.

## Description

### FIELD OF THE INVENTION

Embodiments described herein generally relate to quantum communication, including quantum key distribution.

### BACKGROUND TO THE INVENTION

In a quantum communication system, information is encoded into a quantum system and sent between a transmitter and a receiver. Quantum effects such as superposition and entanglement can be used to distribute secret keys, perform teleportation, and other exotic tasks.

Quantum key distribution (QKD) is a technique which results in the sharing of cryptographic keys between two parties: a transmitter often referred to as "Alice"; and a receiver often referred to as "Bob". The attraction of this technique is that it provides a test of whether any part of the key can be known to an unauthorised eavesdropper, often referred to as "Eve". In many forms of quantum key distribution, Alice and Bob use two or more non-orthogonal bases in which to encode the bit values. The laws of quantum mechanics dictate that measurement of the photons by Eve without prior knowledge of the encoding basis of each causes an unavoidable change to the state of some of the photons. These changes to the states of the photons will cause errors in the bit values sent between Alice and Bob. By comparing a part of their common bit string, Alice and Bob can thus determine if Eve has gained information.

### BRIEF DESCRIPTION OF FIGURES

Fig. 1 shows a schematic of a quantum communication system;
Fig. 2 shows a schematic of a further quantum communication system;
Fig. 3 shows an example of signals in a quantum communication system;
Fig. 4 shows a quantum communication system according to an embodiment;
Fig. 5 shows a quantum transmitter according to an embodiment;
Fig. 6 shows an example of signals in the quantum communication system of Fig. 4;
Fig. 8 shows simulated performance of the quantum communication system of Fig. 4;

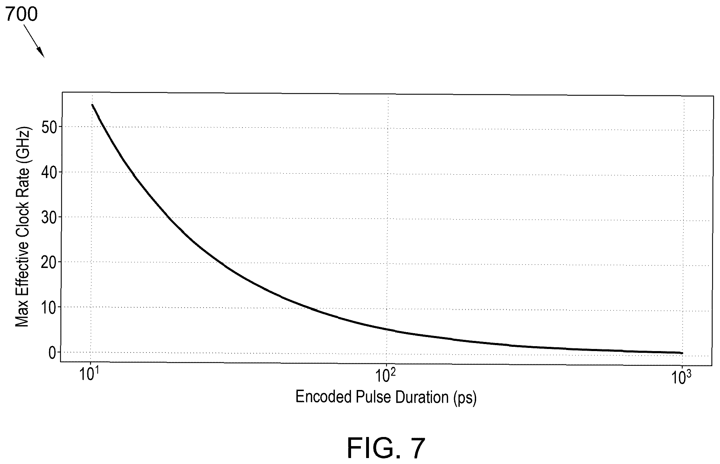

Fig. 7 shows an example of a quantum key distribution (QKD) process;

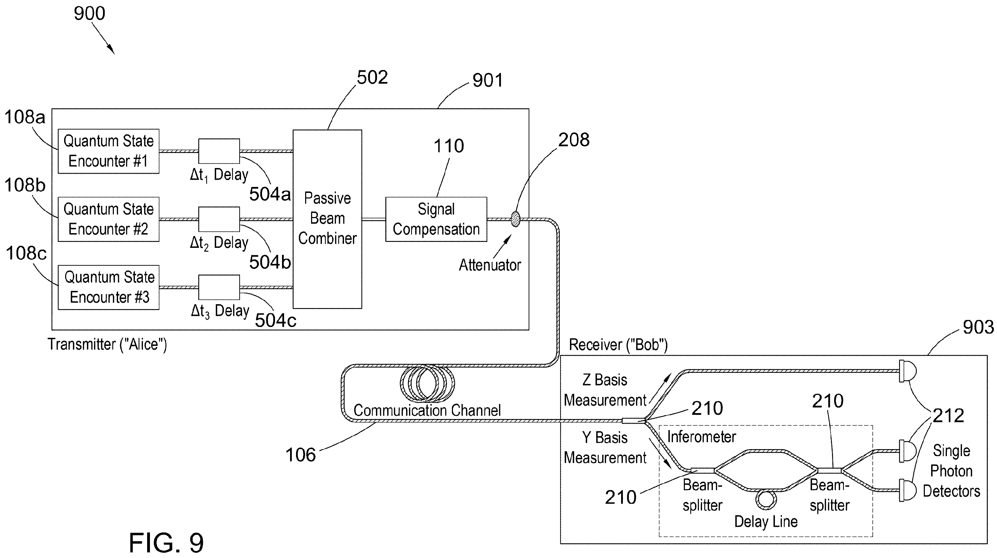

Fig. 9 shows a quantum communication system according to an embodiment;

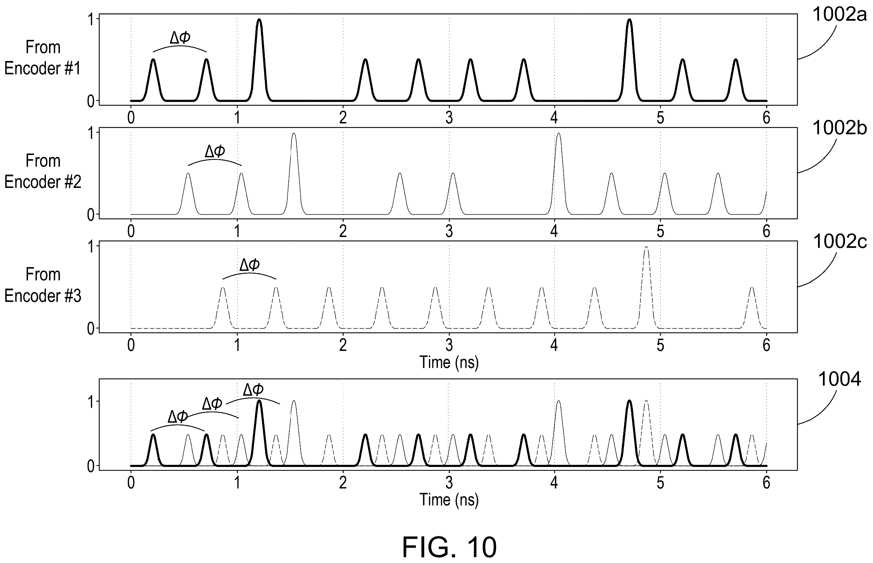

Fig. 10 shows an example of signals in the quantum communication system of Fig. 9.

Throughout the figures, like reference signs are used for like elements.

### DETAILED DESCRIPTION

In an embodiment, a quantum transmitter for use in a quantum communication system is provided, the transmitter comprising: a plurality of quantum state encoders, each encoder configured to emit portions of light, each portion encoded with a respective quantum state; and a beam combining module configured to receive portions of light emitted from each quantum state encoder, and combine the received portions to produce output light comprising a sequence of successive portions of light emitted by each encoder.

This allows for an enhancement to the secure bit rate (SBR) of the quantum communication system via temporal multiplexing of light from each of the quantum state encoders. This enhancement is achieved without each individual encoder needing to operate at a higher rate, thereby avoiding the need for e.g. high-speed electronics. This allows for various quantum operations, such as quantum key distribution (QKD), to be accomplished at a higher rate.

Furthermore, since the transmitter outputs a sequence of successive portions of light, the receiver of the quantum communication system need not necessarily be modified, but can process the multiplexed signal using conventional techniques (albeit at a higher frequency). The difficulty of modifying the receiver is therefore avoided. This allows for modular improvement of existing quantum communication systems by upgrading the transmitter to use multiplexing without needing to modify the receiver.

The use of multiple encoders further allows for increased redundancy. In particular, in the case that an encoder fails due to a technical fault, it may still be possible to continue transmitting quantum information (potentially at a reduced rate) provided that at least one other encoder is still functioning.

In an embodiment, the beam combining module is configured to combine the received portions such that an overlap integral of consecutive portions is less than a threshold value. The threshold value may be 1%.

This allows maintaining the distinguishability of consecutive portions at an acceptable level, thereby avoiding too large an increase to the quantum bit error rate (QBER) of the communication system.

In an embodiment, each encoder is configured to emit portions of light at a rate of at least 500 MHz, and may be configured to emit portions of light at a rate of at least 1 GHz.

1 GHz may be achievable using readily available equipment, thereby avoiding the need for complex high-frequency electronics to enable a higher frequency.

In an embodiment, each encoder is configured to emit light of a common wavelength. That is to say, all encoders may be configured to emit light at the same wavelength as each other.

This allows for reduced use of the optical spectrum in transmitting quantum information. In embodiments, this may allow for transmission along a quantum channel that is more wavelength-specific, and/or may allow for transmission along a quantum channel that is shared with other users using other wavelengths. In this way, the temporal multiplexing described herein may be combined with wavelength-division multiplexing along a common channel.

In an embodiment, the transmitter further comprises a controller configured to deliver a respective drive signal to each encoder, wherein the drive signals are offset such that portions of light from each encoder arrive at the beam combining module sequentially.

This allows precise control over the delay added to portions from each encoder, thereby allowing a high degree of configurability for signals to be multiplexed in different ways.

In an embodiment, the beam combining module comprises a respective delay line for each encoder, each delay line configured to delay portions of light emitted by the respective encoder by a respective interval such that portions of light from each encoder arrive at the beam combining module sequentially.

This allows temporal multiplexing to be implemented using widely-available components in a robust and simple manner.

In an embodiment, the beam combining module comprises a switch configured to allow portions of light from each encoder to enter the beam combining module sequentially.

This allows for reduced losses of the combined signals, especially if the encoders are single photon sources.

In an embodiment, each encoder comprises: a continuous wave (CW) laser configured to emit coherent light; and an intensity modulator configured to modulate an intensity of the coherent light such that the coherent light is divided into portions.

In an embodiment, each encoder comprises a pulsed laser. The pulsed laser may be gain switched.

In an embodiment, each encoder comprises a single photon source.

In an embodiment, each encoder comprises either a quantum dot or a single-photon parametric down conversion (SPDC) source.

In an embodiment, the transmitter further comprises a respective phase modulator for each encoder, the phase modulator configured to modulate a phase of each portion of light emitted by the respective encoder.

In an embodiment, a respective polarisation modulator for each encoder, the polarisation modulator configured to modulate a polarisation of each portion of light emitted by the respective encoder.

In an embodiment, the beam combining module comprises a passive beam combiner.

In an embodiment, the passive beam combiner comprises a partially reflective mirror.

In an embodiment, the passive beam combiner comprises a fused fibre coupler.

In an embodiment, the output light is emitted into free space.

In an embodiment, the output light is emitted into an optical fibre.

In an embodiment, the transmitter further comprises an attenuator configured to reduce an intensity of the output light.

In an embodiment, the transmitter further comprises a respective signal compensation module for each encoder, each signal compensation module configured to perform a compensation process on portions of light emitted by the respective encoder.

In an embodiment, the transmitter further comprises a signal compensation module configured to perform a compensation process on the output light.

In an embodiment there is provided a photonic integrated circuit (PIC) comprising the transmitter described above.

This allows a quantum communication system that uses the transmitter to be implemented more compactly. The more encoders are to be multiplexed together, the greater the space saving may be.

In an embodiment there is provided a quantum communication system comprising: the transmitter described above; a quantum communication channel configured to receive and relay light emitted by the transmitter; and a receiver configured to receive light emitted by the transmitter and relayed by the quantum communication channel.

In an embodiment, the system comprises only a single receiver, the receiver configured to receive light from only a single transmitter.

This allows the increased SBR mentioned above to be achieved without the need for complex modifications to the receiver, and without the need for multiple receivers or multiple channels.

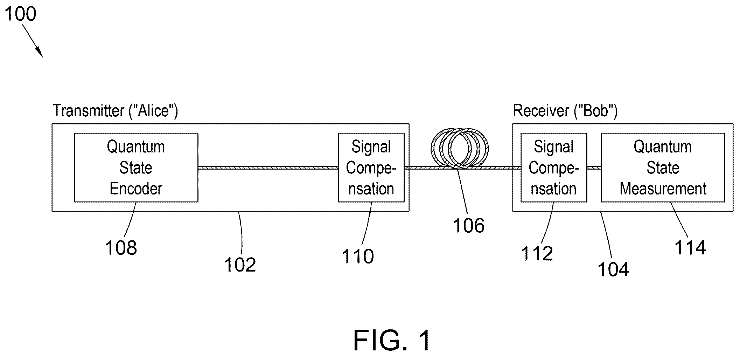

Fig. 1 shows a schematic of a quantum communication system 100. The system 100 comprises a transmitter 102, a receiver 104, and a channel 106. The transmitter 102 comprises a quantum state encoder 108, and may comprise a signal compensation module 110. The receiver 104 comprises a quantum state measurement module 114, and may comprise a signal compensation module 112.

The quantum state encoder 108 may generate light, for example in the form of optical pulses, that are encoded with quantum information. For example, the quantum state encoder 108 may encode quantum information into the generated light using polarisation encoding (which may refer to quantum information encoded in the polarisation of light), time-bin encoding (which may refer to quantum information encoded using two time bins, with information either in the on-off-keying of the bins or in the phase between them), or any other quantum information encoding scheme.

Light generated by the quantum state encoder 108 is transmitted along the channel 106. Transmission through the channel 106 may comprise transmission through free space and/or through an optical fibre.

The quantum state measurement module 114 performs measurements on light received by the receiver 104 from the transmitter 102 via the channel 106. These measurements may involve performing single-photon detections with a random choice of basis each time. For example, if the transmitter 102 is using polarisation encoding, the quantum state measurement module 114 may randomly choose to measure either in a horizontal/vertical polarisation basis, or in a diagonal/antidiagonal polarisation basis, for each measurement.

The signal compensation modules 110, 112 are optional, and are configured to reduce optical distortions introduced by the channel 106. For example, if the channel 106 uses optical fibres, these fibres may induce timing uncertainties (through thermal/mechanically induced path length changes), random polarisation rotation, and/or dispersive pulse broadening. The signal compensation modules 110, 112 may include any suitable type of compensation to correct for such factors, such as polarisation controllers and/or dispersion compensation.

One measure of the performance of the system 100 is the secure bit rate (SBR), which may be defined as the rate at which bits are output for use in cryptographic applications. One factor that affects the SBR is the clock rate of the transmitter 102, which may be defined as the rate at which quantum states are encoded and transmitted to the receiver 104. This clock rate is partly determined by the rate at which the quantum state encoder 108 is able to encode quantum states onto portions of light and output this light.

While the quantum state encoder 108 may use any suitable technology, it is noted that technologies involving electronic control signals may struggle to achieve a clock rate significantly higher than 1 GHz - that is to say, the quantum state encoder 108 may not be able to encode more than approximately one qubit per nanosecond into emitted light. This is both because of the sophisticated and specialist electronics required to achieve such frequencies, and because of increased risk of distortion in the channel 106 if the channel makes use of optical fibres.

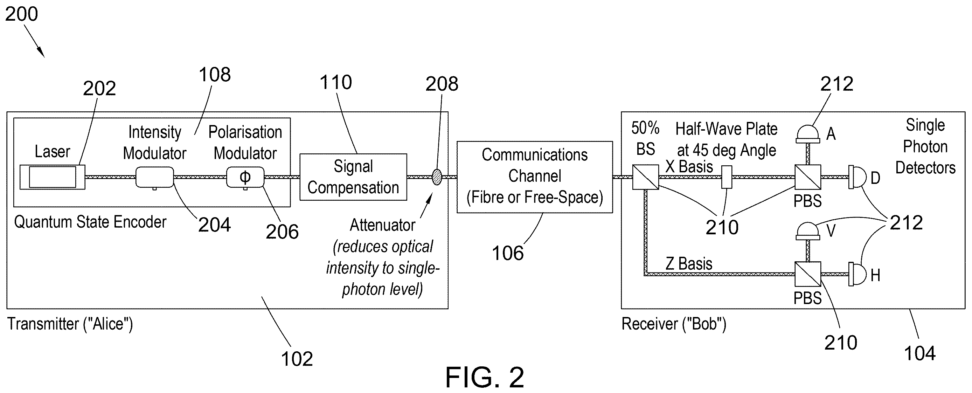

Fig. 2 shows a schematic of a further quantum communication system 200. The system 200 employs polarisation encoding.

In the system 200, the quantum state encoder 108 comprises a laser 202 and a polarisation modulator 206, and optionally further comprise an intensity modulator 204 and/or a phase modulator (not shown).

The laser 202 may be operated in a gain-switched mode. Gain-switching refers to a process wherein the laser 202 is switched repeatedly from below its lasing threshold to above the lasing threshold and back. Each time the laser 202 is switched above the lasing threshold it produces a pulse with a phase sampled from a uniform random distribution due to the randomness of vacuum fluctuations.

Alternatively, the laser 202 may operate in continuous wave (CW) mode. In this case, the optional intensity modulator 204 may be used to convert the continuous output of the laser 202 into a series of pulses. The optional phase modulator may be used to alter (for example, randomise) the phase of these pulses. In this manner, the laser 202 in CW mode, intensity modulator 204, and phase modulator may produce output light similar to the output of a gain-switched laser.

In embodiments, the encoder 108 may not use a laser, but may instead comprise an alternative light source such as a single photon source. For example the encoder 108 may comprise a source using spontaneous parametric down conversion (SPDC) to generate photons, and/or may comprise a quantum dot. In such embodiments, considerations that are described herein as applying to pulses of light may instead apply to individual photons emitted by the encoder 108. To encapsulate these options, the term "portion" of light may be used herein to refer to a unit of emitted light such as a pulse, a single photon, or any other suitably discrete unit of emitted light where the probability of the unit containing more than one photon is less than 1 (for example, 0.5 or less) and/or is much less than 1 (for example, 0.1 or less).

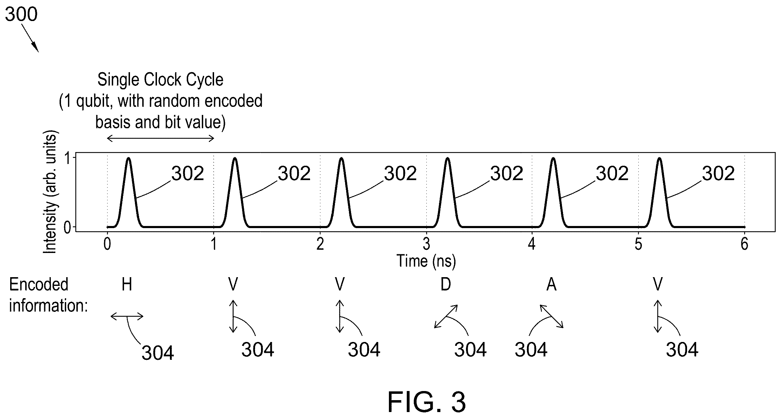

The polarisation modulator 206 may be configured to modulate the polarisation of each successive pulse (or photon) in order to encode quantum information. For example, each successive pulse may be encoded to have a polarisation that is either horizontal (H) or vertical (V) within a "Z" basis, or diagonal (D) or antidiagonal (A) within an "X" basis. An example of this is discussed below with reference to Fig. 3.

The transmitter 102 may further comprise an optional attenuator 208. In cases where the output of the quantum state encoder 108 is significantly above the single-photon level, for example when the laser 202 is operating in CW mode, the attenuator 208 may reduce the brightness of light emitted by the transmitter 102 to a level appropriate for QKD (such as single photon emission). If the encoder 108 uses a single photon source, there may be no reason to include an attenuator 108.

The receiver 104 comprises one or more passive optical components 210 and one or more active optical components 212. In the polarisation encoding example of Fig. 2 the passive optical components 210 may, as shown, comprise 50-50 beamsplitters, polarising beam splitters, and polarising elements such as waveplates. The active optical components 212 may comprise single photon detectors as shown. These single photon detectors may be free-running, gated, or a mixture thereof. If the single photon detectors are gated, they may be driven at a frequency matching the clock rate of the transmitter 102.

Examples of suitable single photon detectors include single photon superconducting nanowire detectors (SNSPDs) and avalanche photodiodes (APDs).

In one example, the receiver 104 may comprise a 50% beamsplitter providing passive basis selection, i.e. sending some photons randomly to be measured in the X basis (resolving A and D polarisations) or otherwise for measurement in the Z basis (resolving H and D polarisations). Alternatively, other schemes may be implemented using a ratio between the X and Z measurements that is different from 50%.

As noted above with regard to Fig. 1, one factor influencing the SBR of the system 200 is the clock rate of the quantum state encoder 108, which may be on the order of 1 GHz due to limitations of whatever electronic apparatus is used to drive the laser 202 and modulators 204, 206 if present.

In the particular example of Fig. 2, the SBR may further be limited by modulation bandwidth limitations association with lasers and optical intensity/phase/polarisation modulators. Limiting factors may be related to laser cavity size and semiconductor material properties, such that it may be a significant challenge to increase bandwidths. Attempting to modulate such optical components at higher rates may result in correlations between encoded pulses due to an encoder failing to return to a steady-state between modulation features. Such correlations may present issues for QKD if consecutive pulses are no longer truly independent and thus, not truly meeting the requirements for encoding to satisfy QKD security proofs.

The SBR may also be affected by components of the receiver 104. In embodiments, passive components 210 may not affect the receiver 104's bandwidth. If the active components 212 comprise free-running single photon detectors, these may also be able to operate at a sufficiently high rate so as not to limit SBR. Gated photon detectors may have difficulty operating at frequencies much higher than 1 GHz unless specialist electronic control equipment is used. However, the gating signal provided to gated photon detectors may be a simple binary periodic signal, and so this frequency may be easier to increase than e.g. the frequency of a control signal for a quantum state encoder.

Fig. 3 shows an example output 300 of the transmitter 102 of the system 200 shown in Fig. 2. The output 300 comprises a series of pulses 302, each with a respective polarisation 304 set by the polarisation modulator 206.

In the particular example of Fig. 3, the separation of consecutive pulses can be seen to be 1 ns, such that the clock rate of the transmitter 102 is 1 GHz. The full-width half-maximum (FWHM) of each successive pulse 302 in this particular example is 100 ps, thereby allowing for a clear separation of pulses at 1 GHz clock rate.

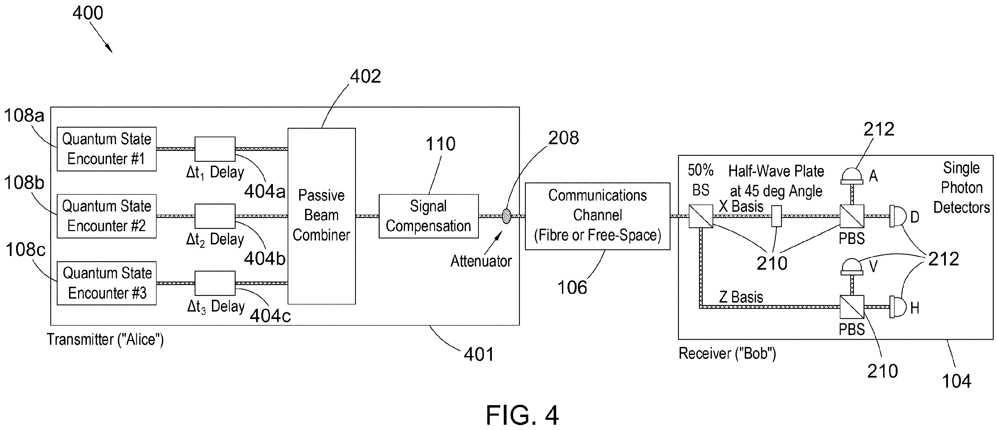

Fig. 4 shows a further quantum communication system 400. The system 400 is configured to implement temporal multiplexing (otherwise called time-division multiplexing) of light from a plurality of quantum state encoders, as described below.

The system 400 comprises a transmitter 401, a channel 106, and a receiver 106. The channel 106 and receiver 104 of the system 400 are as described above for Fig. 2.

The transmitter 401 comprises three quantum state encoders 108a, 108b, 108c and a beam combiner 402. The transmitter 401 may optionally further comprise a respective delay line 404a, 404b, 404c for each encoder 108a, 108b, 108c.

Each of the encoders 108a, 108b, 108c may function similarly to the encoder 108 described above with reference to Fig. 2. Each of the three encoders 108a, 108b, 108c may operate in parallel, with each of the three emitting successive portions of light encoded with quantum information in any of the ways described herein.

The system 400 is configured such that portions of light from the encoders 108a, 108b, 108c are multiplexed at the beam combiner 402. That is to say, the beam combiner 402 combines portions of light from each encoder 108a, 108b, 108c such that the output of the beam combiner 402 is light that comprises a sequence of successive portions (e.g. pulses or photons) of light emitted by each encoder 108a, 108b, 108c.

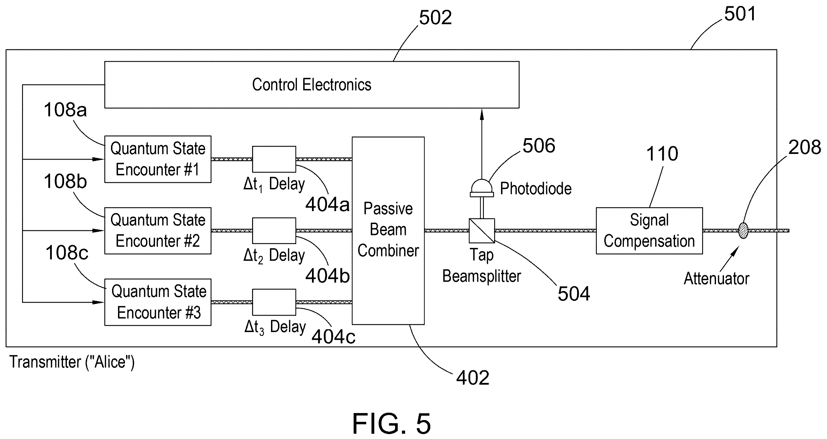

This multiplexing may be achieved in any suitable manner. Two examples will now be described, and a third is described below with reference to Fig. 5.

As one example, the transmitter 401 may comprise a respective delay line 404a, 404b, 404c for each encoder 108a, 108b, 108c as described above. These delay lines 404a, 404b, 404c may be configured to delay light from each respective encoder 108a, 108b, 108c by a respective amount. These amounts may be chosen such that, if each encoder 108a, 108b, 108c emits a portion of light simultaneously, the portions will not arrive simultaneously at the beam combiner 402, but will arrive sequentially.

In this example, the beam combiner 402 may be a passive beam combiner; that is to say, the beam combiner 402 may comprise only passive optical elements. For example, in a free space implementation the beam combiner 402 may comprise a partially reflective mirror, while in a fibre-based implementation the beam combiner 402 may comprise fused fibre couplers.

As a further example, the beam combiner 402 may be an active beam combiner. In this example, the beam combiner 402 may comprise an optical switch comprising a plurality of ports that can be opened or closed, a respective port being configured to receive light from each encoder 108a, 108b, 108c. The beam combiner 402 may then sequentially open and close each of these respective ports to allow light from each encoder 108a, 108b, 108c to pass sequentially.

An active beam combiner may be of particular use in embodiments wherein each encoder 108a, 108b, 108c is a single-photon source, as active beam combining may incur reduced losses compared to passive beam combining.

While Fig. 4 shows three encoders 108a, 108b, 108c, the transmitter 401 may comprise any number of encoders that is at least two.

The encoders 108a, 108b, 108c may emit light of a common wavelength (i.e. all the same wavelength), or one or more of the encoders 108a, 108b, 108c may emit light at different wavelengths. The temporal multiplexing schemes described herein may be applied equally whether the wavelengths are the same or different. In embodiments wherein the channel 106 has a narrow wavelength range for optimal transmission, the encoders 108a, 108b, 108c may share a common wavelength within this range.

In embodiments wherein the encoders 108a, 108b, 108c share a common wavelength, the channel 106 may be simultaneously used for transmissions at other wavelengths. That is, in addition to the temporal multiplexing described herein, the channel 106 may simultaneously be used for wavelength-division multiplexing.

While Fig. 4 shows a single signal compensation module 110 as described above with reference to Fig. 1, the system 400 may instead be implemented with a respective signal compensation module 110 for each encoder 108a, 108b, 108c. These signal compensation modules 110 may be positioned before the beam combiner 402 in order to address the light emitter by each encoder 108a, 108b, 108c individually.

While Fig. 4 shows a single attenuator 208 positioned after the beam combiner 402, a respective attenuator 208 for each encoder 108a, 108b, 108c may additionally or alternatively be placed before the beam combiner 402. These respective attenuators 208 may all have the same attenuation value, or may alternatively have different values. These different values may be chosen to equalise the energy of portions of light arriving at the beam combiner 402 from different encoders 108a, 108b, 108c.

In embodiments where the delay lines 404a, 404b, 404c are present, the beam combiner 402 and the delay lines 404a, 404b, 404c may be collectively referred to herein as a beam combining module. If the delay lines 404a, 404b, 404c are not present, the beam combiner 402 may be referred to herein as a beam combining module.

Any part of the system 400, such as the transmitter 401 and/or receiver 104 (or the transmitter 501 described below), may be implemented as a photonic integrated circuit (PIC). For example, the system 400 may comprise the transmitter 401 and the receiver 104 on respective PICs joined by the channel 106, which may be an optical fibre.

Fig. 5 shows a further example transmitter 501, which may be used in the system 400 instead of the transmitter 401.

The transmitter 501 comprises control electronics 502. The control electronics 502 are configured to deliver a respective control signal to each quantum state encoder 108a, 108b, 108c. These control signals may be offset such that the encoders 108a, 108b, 108c do not emit portions of light simultaneously, but instead emit portions of light sequentially. For example, a particular encoder 108a may be triggered first, then a further encoder 108b, and so on. In this manner, portions of light from each respective encoder 108a, 108b, 108c may arrive sequentially at the beam combiner 402.

The control electronics 502 may receive feedback from the beam combiner 402 output in order to allow more effective control. As shown in Fig. 5, this may be achieved using a tap beamsplitter 504 and a photodiode 506 to detect a small portion of the output of the beam combiner 402. Alternatively, any optics suitable for providing a feedback signal to the control electronics 502 may be used.

The feedback signal may allow for control of the output intensity of the transmitter 501, thereby helping to ensure that each successive pulse has the same energy. Such a feedback system may be implemented even if control signal offsets are not used to achieve temporal multiplexing; for example, a feedback loop may be added to the system 400 of Fig. 4 to control pulse intensity.

The use of staggered control signals may allow for temporal multiplexing using a passive beam combiner 402 without using delay lines 404a, 404b, 404c.

The control electronics 502 may be best suited to embodiments wherein each encoder 108a, 108b, 108c comprises an electronically driven laser.

In all other respects, the above description of the transmitter 401 applies equally to the transmitter 501.

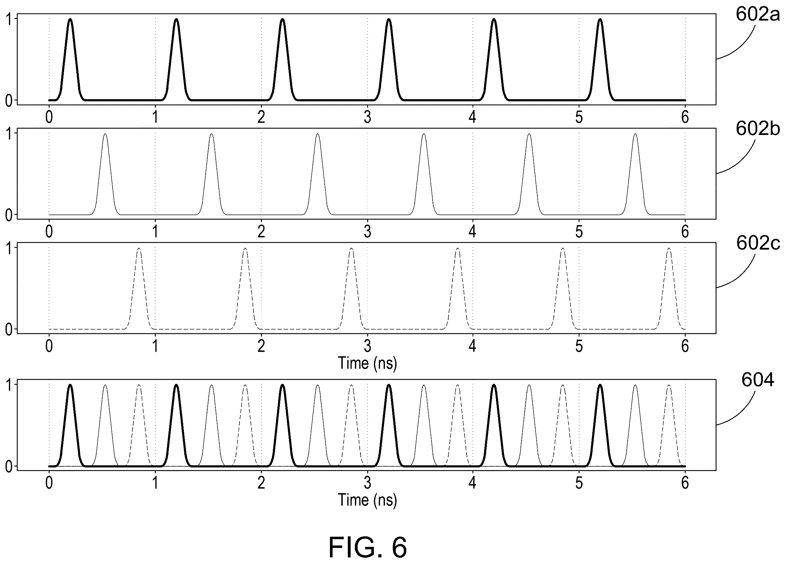

Fig. 6 shows an example operation of the beam combiner 402 for an example with three encoders 108a, 108b, 108c. As shown in Fig. 6, each encoder 108a, 108b, 108c emits a respective sequence of portions of light 602a, 602b, 602c. These portions are encoded with quantum information, for example in the manner shown above in Fig. 3.

It is noted that the clock rate of each encoder 108a, 108b, 108c is 1 GHz, as with Fig. 3 - that is, the separation between successive portions in each sequence 602a, 602b, 602c is 1 ns. In this example the sequences 602a, 602b, 602c are offset relative to one another; this may, for example, be achieved with delay lines 404a, 404b, 404c or control electronics 502 as described above. The output 604 of the beam combiner 402 (which may be a passive beam combiner) therefore comprises a sequence of successive portions of light emitted by each encoder 108a, 108b, 108c, referred to herein as temporal multiplexing.

It is noted that the output 604 resembles what might be expected from a quantum state encoder capable of achieved a clock rate of 3 GHz - that is, three portions of light are output each nanosecond. The transmitter 401 may therefore be considered to have an "effective" clock rate of 3 GHz, thereby potentially allowing for an increased SBR of the system 400. As shown, this may be achieved using three encoders 108a, 108b, 108c operating at 1 GHz, without any individual component needing to operate at 3 GHz.

The scheme of Fig. 6 may be applied to other numbers of encoders 108a, 108b, 108c. For example, five encoders 108a, 108b, 108c may be multiplexed as shown in Fig. 6 to achieve an effective clock rate of 5 GHz.

In the particular example of Fig. 6, the FWHM of each pulse remains 100 ps, as in Fig. 3. It can be seen that this still allows for a clear separation of each successive pulse in the output 604, though with smaller gaps between pulses than in Fig. 3. The effect of pulse width will be described in more detail below with reference to Fig. 7.

In embodiments, when the output 604 is received by the received 104, the receiver 104 may measure and process the output 604 the same as would be done in the system 200 - that is, no particular modifications to the receiver 104 may be necessary to implement temporal multiplexing. In particular, if the receiver 104 uses free-running photodetectors as described above, the receiver 104 may be able to operate at the increased effective clock rate (e.g. 3 GHz) without issue.

If the receiver 104 uses gated photodetectors or other components that may limit the frequency at which the receiver 104 can operate, this may limit the SBR that the system 400 can operate at. However, in embodiments it may nonetheless be simpler to modify the receiver 104 to operate at higher frequencies (for example, using specialist high-frequency electronics) than to modify a transmitter 102. The use of temporal multiplexing may therefore still allow the system 400 to be modified to operate at higher SBRs more easily, even if some modification is still required to the receiver 104.

In embodiments, if the receiver 104 is not modified compared to the receiver 104 shown in Fig. 2 for the non-multiplexed system 200, it may be said that the receiver 104 is a single receiver configured to receive light from a single transmitter, in that the receiver 104 is the same as a receiver used in a system with no multiplexing.

Fig. 7 shows a graph 700 of the maximum effective clock rate that can be achieved as a function of pulse width, based on assumptions that will now be described.

Considering Fig. 6, it is noted that if significantly more encoders 108a, 108b, 108c were multiplexed, or if each pulse were significantly wider, successive pulses in the output 604 would begin to overlap. At this point, it becomes impossible to deterministically know whether a recorded detection in the overlap region corresponds to one qubit or the other. This results in an increased quantum bit error rate (QBER) for the quantum communication system 400.

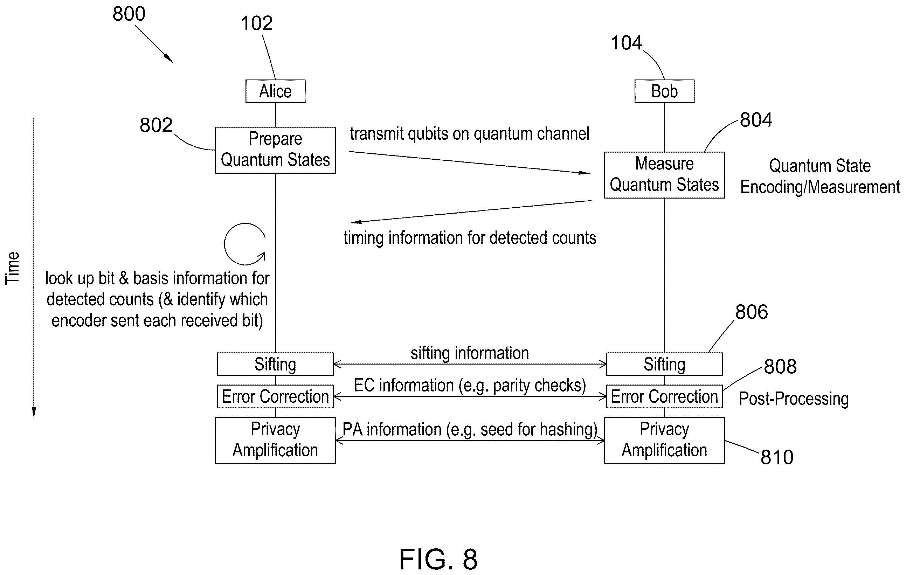

In embodiments, increased QBER may result in information being discarded during a subsequent privacy amplification stage 810 (discussed below with reference to Fig. 8). This effectively reduces the SBR of the system 400. Furthermore, if the QBER is too high, it may become impossible to generate secure key material for QKD.

The graph 700 assumes that the maximum tolerable overlap between pulses (evaluated as the overlap integral of consecutive Gaussian pulses) is 1%. The reduction in SBR arising from this overlap may be balanced against the increase in SBR resulting from temporal multiplexing.

Fig. 7 therefore indicates that, for sufficiently short pulses (and correspondingly larger numbers of encoders 108a, 108b, 108c each with a 1 GHz clock rate), SBRs in the range of 10s of GHz can be achieved.

Fig. 8 shows an example QKD protocol 800 that may be implemented using the system 400. The protocol 800 comprises quantum state preparation 802 at the transmitter 102, quantum state measurement at the receiver 104, and sifting 806, error correction 808, and privacy amplification 810 across both the transmitter 102 and the receiver 104.

Quantum state preparation 802 may comprise the transmitter 102 preparing and transmitting portions of light encoded with quantum information via the channel 106 as described herein.

Quantum state measurement 804 may comprise the receiver 104 receiving light transmitted by the transmitter 102 via the channel 106 and conducting measurements on the received light.

Sifting 806 may comprise the receiver 104 informing the transmitter 102 as to which quantum states it measured and the basis it used for the measurement (but not the value it measured). The transmitter 102 and receiver 104 may then discard raw key bits that were not generated (at the transmitter 102) and measured (at the receiver 104) in the same basis.

Error correction 808 may comprise the execution of an error correcting protocol (such as Cascade or LDPC) between transmitter 102 and receiver 104 which identifies and corrects any differences (i.e. errors) in bit values between the sifted key at the transmitter 102 and receiver 104. This protocol may involve disclosing some information about the keys (e.g. disclosing parity bits that are used for error detection).

Privacy amplification 810 may comprise reducing the error corrected key size to form a final, secure key that satisfies the information theoretical security requirements of the QKD system. Specifically, the amount of "disclosed information" during error correction may be quantified and used to compute the maximum secure output key size, according to a given QKD security proof. A randomness extraction algorithm may then be used (e.g. Universal-2 hashing) to reduce the error corrected key down to a final, smaller but more secure, output key.

Fig. 9 shows a further exemplary quantum communication system 900. The system 900 implements temporal multiplexing in a similar manner to the system 400, but encodes quantum information using time-bin encoding rather than polarisation encoding as described below.

The system 900 comprises a transmitter 901 and a receiver 903 in communication via a channel 106. The channel 106 may operate as described above.

The encoders 108a, 108b, 108c of the transmitter 901 may be of any design suitable for generating encoding time bins. For example, each encoder 108a, 108b, 108c may comprise an asymmetric Mach-Zender interferometer (AMZI), and/or may employ phase seeded injection locking.

The receiver 903 may be of any design suitable for use in time-bin encoding systems, such as the design shown in Fig. 9.

The output trains from each encoder 108a, 108b, 108c may, for example, be in either a "Z" basis (time-bin on/off keying) or an "X" basis (phase encoded as Δ*ϕ* = {0,*π*} between a pair of time bins). To achieve the same photon flux in each qubit, the pulse energies for Z basis may be twice that of the X basis (which comprises two pulses in superposition for a qubit).

The delaying and combining of pulses to achieve temporal multiplexing may be implemented as described above with reference to Figs. 4 and 5.

Fig. 10 shows an example operation of the beam combiner 402 for an example with three encoders 108a, 108b, 108c using time-bin encoding. Each encoder 108a, 108b, 108c emits a respective sequence of portions of light 1002a, 1002b, 1002c, and these are combined into an output 1004 at the beam combiner using any of the methods described herein.

Compared to polarisation encoding, the time bin encoded pulse trains may comprise a pair of pulses for each qubit due to the existence of two time bins per qubit (which may be called the "early time bin" and "late time bin"). Thus, the intrinsic pulse spacing for a 1 GHz clocked encoder 108a, 108b, 108c may be 500 ps rather than 1 ns. Therefore, to avoid pulse overlap between encoders 108a, 108b, 108c when combining, the effective clock rates that can be achieved may be reduced by approximately half compared to polarisation encoding. That said, with appropriate choice of pulse duration, the temporal multiplexing of N time bin encoders 108a, 108b, 108c is still able to achieve N x enhancement to the SBR.

Whilst certain embodiments have been described, these embodiments have been presented by way of example only, and are not intended to limit the scope of the inventions. Indeed, the novel devices, and methods described herein may be embodied in a variety of other forms; furthermore, various omissions, substitutions and changes in the form of the devices, methods and products described herein may be made without departing from the scope of the inventions as defined by the appended claims. The accompanying claims are intended to cover such forms or modifications as would fall within the scope of the inventions.

## Claims

1. A quantum transmitter for use in a quantum communication system, the transmitter comprising:
a plurality of quantum state encoders, each encoder configured to emit portions of light, each portion encoded with a respective quantum state; and
a beam combining module configured to receive portions of light emitted from each quantum state encoder, and combine the received portions to produce output light comprising a sequence of successive portions of light emitted by each encoder.

2. The transmitter of claim 1, wherein the beam combining module is configured to combine the received portions such that an overlap integral of consecutive portions is less than a threshold value, preferably wherein the threshold value is 1%.

3. The transmitter of claim 1 or 2, wherein each encoder is configured to emit portions of light at a rate of at least 1 GHz and/or wherein each encoder is configured to emit light of a common wavelength.

4. The transmitter of any preceding claim, further comprising a controller configured to deliver a respective drive signal to each encoder, wherein the drive signals are offset such that portions of light from each encoder arrive at the beam combining module sequentially.

5. The transmitter of any preceding claim, wherein the beam combining module comprises a respective delay line for each encoder, each delay line configured to delay portions of light emitted by the respective encoder by a respective interval such that portions of light from each encoder arrive at the beam combining module sequentially and/or wherein the beam combining module comprises a switch configured to allow portions of light from each encoder to enter the beam combining module sequentially.

6. The transmitter of any preceding claim, wherein each encoder comprises:
a continuous wave (CW) laser configured to emit coherent light; and
an intensity modulator configured to modulate an intensity of the coherent light such that the coherent light is divided into portions.

7. The transmitter of any preceding claim, wherein each encoder comprises a pulsed laser, preferably wherein the pulsed laser is gain switched.

8. The transmitter of any preceding claim, wherein each encoder comprises a single photon source and optionally wherein each encoder comprises either a quantum dot or a spontaneous parametric down conversion (SPDC) source.

9. The transmitter of any preceding claim, further comprising a respective phase modulator for each encoder, the phase modulator configured to modulate a phase of each portion of light emitted by the respective encoder.

10. The transmitter of any preceding claim, further comprising a respective polarisation modulator for each encoder, the polarisation modulator configured to modulate a polarisation of each portion of light emitted by the respective encoder.

11. The transmitter of any preceding claim, wherein the beam combining module comprises a passive beam combiner, and optionally wherein the passive beam combiner comprises at least one of a partially reflective mirror or a fused fibre coupler.

12. The transmitter of any preceding claim, wherein the output light is emitted into free space or wherein the output light is emitted into an optical fibre.

13. The transmitter of any preceding claim, further comprising a respective signal compensation module for each encoder, each signal compensation module configured to perform a compensation process on portions of light emitted by the respective encoder.

14. A photonic integrated circuit (PIC) comprising the transmitter of any preceding claim.

15. A quantum communication system comprising:
the transmitter of any of claims 1 to 13,
a quantum communication channel configured to receive and relay light emitted by the transmitter; and
a receiver configured to receive light emitted by the transmitter and relayed by the quantum communication channel.
